# EUROPÄISCHE PATENTSCHRIFT

(11) **EP 2 760 159 B1**
(45) Veröffentlichungstag und Bekanntmachung des Hinweises auf die Patenterteilung: **26.07.2017**
(21) Anmeldenummer: 13153041.2
(22) Anmeldetag: 29.01.2013
(51) Int. Cl.: H04L 12/24, G06F 1/26

(54) **Lastadaptive Steuerung unterstützender Systeme in einem Telekommunikationsnetz**
Load adaptive control of supportive systems in a telecommunications network
Commande adaptée à la charge d'un système de support dans un réseau de télécommunication

(43) Veröffentlichungstag der Anmeldung: 30.07.2014
(73) Patentinhaber: Deutsche Telekom AG, 53113 Bonn (DE)
(72) Erfinder: Lange, Christoph, 10315 Berlin (DE); Kosiankowski, Dirk, 15732 Eichwalde (DE)
(74) Vertreter: Vossius & Partner Patentanwälte Rechtsanwälte mbB

(56) Entgegenhaltungen:
- WO-A2-2012/047746
- AVOCENT: "Data Center Infrastructure Management (DCIM) White paper", INTERNET CITATION, September 2010 (2010-09), Seiten 1-16, XP002663281, Gefunden im Internet: URL:http://www.edcosurge.com/en-US/About/E vents/Documents/OOW-MediaKit/10_DCIM_Trell is.pdf [gefunden am 2011-11-09]

## Beschreibung

Die vorliegende Erfindung betrifft allgemein das Gebiet der Telekommuukation, und insbesondere das Zusammenspiel von Netzmanagementsystemen in Telekommunikationsnetzen und die Steuerung unterstützender Systeme und Anlagen in Betriebsstellen des Telekommunikationsnetzes, beispielsweise Anlagen der Leistungsversorgung und der Raumklimatisierung auf der Ebene der Betriebsstellen.

Das prognostizierte Wachstum des Datenverkehrs im Internet erfordert einen entsprechenden Ausbau von Telekommunikationsnetzen. Geschieht dies mit Systemen und Architekturen entsprechend des heutigen Standes der Technik, wird auch der Energieverbrauch von Netzen, sowie - kumuliert - von Geräten der Informations- und Kommunikationstechnik (IKT) stark ansteigen. Deshalb werden Strategien wichtig, die es erlauben, diesen IKT-induzierten Energiebedarf zu begrenzen bzw. zu reduzieren. Um eine signifikante Verbesserung der Energieeffizienz im Betrieb von Telekommunikationsnetzen zu erzielen, werden unterschiedliche Optionen diskutiert, wobei insbesondere dem bedarfsgerechten - verkehrslastadaptiven - Betrieb eines Telekommunikationsnetzes eine prominente Rolle zukommt.

Telekommunikationsnetze sind üblicherweise hierarchisch aus verschiedenen Netzabschnitten bzw. -plattformen aufgebaut. So bestehen Breitbandfestnetze z. B. aus Zugangsnetz, Aggregations- und Kernnetz sowie zugehörigen optischen Transportnetzen (für Aggregations- und Kernnetz). Die Netzelemente befinden sich in Betriebsstellen, wobei Netzelemente unterschiedlicher Netzabschnitte gemeinsam in einer Betriebsstelle untergebracht sind. Typischerweise sind in den Betriebsstellen eines Telekommunikationsnetzes auch Systeme weiterer Netzbereiche wie z. B. Mobilfunkausrüstung sowie Telefonvermittlungssysteme usw. untergebracht.

Für den effizienten und reibungslosen Betrieb der jeweiligen Netzelemente in einem Abschnitt bzw. in einer Netzplattform sind Netzmanagementsysteme (NMS) unerlässlich, die jedes Netzelement im Wirknetz ansprechen können und so Statusinformationen abfragen und Steuerungsinformationen senden können. Diese Netzmanagementsysteme arbeiten üblicherweise je Plattform und werden über ein eigenständiges Data Communication Network (DCN) mit den Netzelementen des Wirknetzes über dedizierte Schnittstellen verbunden. Die Netzmanagementsysteme verschiedener Plattformen interagieren untereinander dabei jedoch nicht. Das Prinzip der Bestückung von Betriebsstellen mit Netzelementen verschiedener Netzabschnitte und des Netzmanagements entsprechend des heutigen Standes der Technik ist in Fig. 1 dargestellt. Als Beispiel beschreibt die WO 2012/047746 A2 ein System und Verfahren zur Überwachung und Verwaltung von Datencenterressourcen.

Die einzelnen Netzmanagementsysteme können dabei auch an unterschiedlichen Standorten aufgebaut sein und werden von dedizierten Servicekräften betreut. Diese Servicekräfte überwachen üblicherweise den reibungslosen Betrieb der Netzelemente in ihrem Verantwortungsbereich (Netzabschnitt) und greifen, wenn erforderlich, in den automatisierten Ablauf ein. Die Servicekräfte haben dabei nur Zugriff auf Netzelemente, die im Administrationsbereich des Netzmanagementsystems liegen. Dementsprechend können auch nur diese Netzelemente in einer bestimmten Betriebsstelle ausgewählt werden, um geeignete Informationen zum aktuellen Zustand des Elementes zu erhalten.

Da dem Energieverbrauch von Telekommunikationsnetzen sowohl vor dem Hintergrund der Diskussion zum Klimawandel als auch aus dem Blickwinkel der dem Netzbetreiber entstehenden Energiekosten in der jüngsten Vergangenheit steigende Aufmerksamkeit zu Teil wird, werden Strategien bedeutsam, die es erlauben, den IKT-Energiebedarf zu begrenzen bzw. zu reduzieren. Um den Energieverbrauch von Telekommunikationsnetzen angesichts steigenden Datenverkehrsvolumens zu stabilisieren bzw. zu senken, wird der sogenannte lastadaptive Betrieb diskutiert, bei dem in Abhängigkeit von zeitlich variierenden Verkehrsbedarfen Netzkapazität nur insoweit temporär aktiviert und genutzt werden soll, wie sie auch wirklich benötigt wird. Dieses Vorgehen basiert auf Beobachtungen des Datenverkehrs, wie er beispielsweise von AMS-IX (Amsterdam Internet Exchange: Traffic Statistics, abrufbar unter http://www.ams-ix.org/statistics) oder DE-CIX (DE-CIX Internet Exchange: Traffic Statistics, abrufbar unter: http://www.de-cix.net/about/statistics/) dokumentiert wird, und der darauf gründenden Erkenntnis, dass der wirkliche Datenverkehr in Telekommunikationsnetzen zeitlich zum Teil stark variiert. Dies steht im Gegensatz zur konventionellen Herangehensweise, bei der Telekommunikationsnetze auf einen prognostizierten Spitzenverkehrsbedarf hin, üblicherweise zuzüglich einer Reserve, dimensioniert und dann unabhängig vom zeitlich fluktuierenden Verkehrsbedarf mit dieser konstanten Kapazität betrieben werden - und darauf basierend konstant über der Zeit Energie verbrauchen.

Der lastadaptive Netzbetrieb führt dazu, dass auf der Ebene der Betriebsstellen der Leistungsbedarf auch zeitlich variiert: Die tatsächliche Leistungskurve einer Betriebsstelle hängt dann davon ab, welche Netzelemente dort verortet sind - handelt es sich zum Beispiel um einen Standort mit Kernnetz-, Aggregationsnetz- und Zugangsnetzelementen oder um einen reinen Zugangsnetzstandort? - und wie der tatsächliche bzw. prognostizierte Verkehrsverlauf die aktivierte Kapazität und damit den Leistungsbedarf der einzelnen Netzelemente bestimmt.

Wird ein Telekommunikationsnetz lastadaptiv betrieben, sind also in den Betriebsstellen die Netzelemente verschiedener Netzabschnitte unterschiedlich ausgelastet - je nach gerade vorliegendem tatsächlichem Verkehr bzw. dessen Prognose. Die unterschiedliche Auslastung der Netzelemente der verschiedenen Netzabschnitte ergibt sich auch aus verschiedenen Mechanismen, wie die Lastadaptivität der Elemente realisiert wird, d.h. wie sich die bereitzustellende Kapazität und die resultierende, tatsächlich benötigte Leistung zueinander verhalten (Proportionalität, Nichtlinearität). Dies führt zu einem unterschiedlichen zeitlich variablen Leistungsbedarf in jeder Betriebsstelle, der sich aus der Summe der variablen Leistungsbedarfe der in jeder Betriebsstelle vorhandenen Netzelemente ergibt. In der weiteren Versorgungskette in der Betriebsstelle erfordert das wiederum zusätzliche Anstrengungen, wie z. B. hinsichtlich Raumluftkühlungsanforderungen, Klimatisierung und Stromversorgung, um auch hier die zeitlich variable Last (resultierend aus der Lastkurve der lastadaptiv gesteuerten Telekommunikationsnetzelemente) energieeffizient umzusetzen. Der Leistungsbedarf für Raumlufttechnik, Kühlung und unterbrechungsfreie Stromversorgung macht einen beträchtlichen Anteil am Gesamtleistungsbedarf von Betriebsstellen aus (in der Größenordnung von 30%-50%).
Zur Erfassung der notwendigen Leistungsverbrauchsdaten wird gegenwärtig eine entsprechende Standardisierung in der IETF (Internet Engineering Taskforce) in der Arbeitsgruppe EMAN (Energy Management) vorangetrieben (Internet Engineering Task Force (IETF), Energy Management (EMAN) Working Group, abrufbar unter: http://datatracker.ietf.org/wg/eman/). Diese intendierten Daten beschränken sich jedoch auf reine Leistungsbedarfswerte der einzelnen Netzelemente bzw. -komponenten.

Bekannt ist nach der noch unveröffentlichten deutschen Patentanmeldung Nr. DE 10 2012 102 607.6 vom 27. März 2012 ein Verfahren, das es gestattet, insbesondere Anlagen der unterbrechungsfreien Stromversorgung in Betriebsstellen durch modularen Aufbau und geeignete Steuerung energieeffizienter gegenüber heute üblicher Praxis eines monolithischen Aufbaus und ungesteuerten Betriebs zu gestalten. Hierbei liegt der Schwerpunkt auf sequentiell angeordneten Konversionselementen der Stromversorgung in typischen Stromversorgungsketten für Gleich- und Wechselspannungsnetzelemente und wie ein modularer Aufbau hier zu verbesserter Energieeffizienz verhelfen kann.

Es ist eine Aufgabe der vorliegenden Erfindung, eine Regelung bereitzustellen, mit der der Leistungs-/Energiebedarf von Betriebsstellen gesenkt und damit die Gesamtenergieeffizienz von Telekommunikationsnetzen gesteigert werden kann.

Um dies zu erreichen sollen gemäß der Erfindung Informationen bezüglich des Bitraten-(Verkehrs-) Bedarfes bzw. des Leistungsbedarfes je Betriebsstelle miteinander verknüpft werden, die sich vorteilhaft über die einzelnen Netzmanagementsysteme gewinnen lassen. Hierbei können zukünftige, teilweise in der Standardisierung befindliche Funktionen in die jeweiligen einzelnen Netzmanagementsysteme integriert werden, um diese Informationen zu gewinnen und vorzuhalten. Weiterhin sollen die hierzu notwendigen Leistungsverbrauchsinformationen in den einzelnen Netzelementen erfasst und die entsprechenden Daten, z. B. in geeigneten Datenbanken (Management Information Bases, MIB) gespeichert werden. Weiterhin soll eine Auswertung dieser Informationen aus den Netzmanagementsystemen und eine Aggregation dieser Daten je Betriebsstelle erfolgen.

Das Verfahren entsprechend der vorliegenden Erfindung beschreibt also einen Weg, der es über die Nutzung und Verknüpfung der in NMS rudimentär gegebenenfalls vorhandenen und gemäß der Erfindung abzulegenden bzw. zu speichernden Informationen zu Verkehrs- und Leistungsbedarfen je Netzelement ermöglicht, auf Betriebsstellenebene entsprechende Steuerinformationen zu aggregieren. Darüber hinaus kann gemäß der Erfindung jegliche Art von unterstützender Technik in Betriebsstellen in das Verfahren mit einbezogen werden.

Mit anderen Worten liegt der vorliegenden Erfindung die Aufgabe zu Grunde, die netzelementrelevanten Verkehrs- und Leistungsbedarfsinformationen aus den beteiligten NMS je Betriebsstelle zu erfassen und so zu verknüpfen, dass eine über unterschiedliche Netzabschnitte wirkende, übergreifende Steuerung der zum zuverlässigen Betrieb der Telekommunikationsnetzanlagen in einer Betriebsstelle notwendigen unterstützenden Systeme (z. B. Raumlufttechnik, Analgen zur unterbrechungsfreien Stromversorgung) und der damit verbundenen Elemente auf Betriebsstellenebene ermöglicht wird.

Dies ist insbesondere dann von betrieblichem und wirtschaftlichem Interesse, wenn zukünftig ein lastadaptiver Betrieb der Anlagen eines Telekommunikationsnetzes erfolgt, um bedarfsgerecht zu arbeiten und auf diese Weise die Energieeffizienz eines derartigen Netzes zu verbessern: Dann ergeben sich über eine bestimmte Zeitperiode (z. B. eines Tages) hinweg zeitlich veränderliche Leistungsbedarfe der Netzelemente - da diese ihre Kapazität wiederum den zeitlich fluktuierenden Verkehrsanforderungen anpassen - und dieses führt zu ebenso zeitlich variierenden Anforderungen an die Stromversorgung (hinsichtlich der benötigten Leistung) und an die Raumlufttechnik/Klimatisierung (hinsichtlich der notwendigen Kühlung der Betriebsräume).

Ziel ist es also, sämtliche Elemente in der Energieversorgungskette in einer Betriebsstelle (sowohl die Telekommunikationsnetzelemente selbst als auch die Elemente der Betriebsunterstützung/Energieversorgung) in die lastadaptive Steuerung mit einzubeziehen und eine übergeordnete Steuerungsinstanz mit den benötigten Zustandsinformationen zu versorgen, so dass im Idealfall alle beteiligten Elemente in der Kette mit variablen aber stets optimalen Arbeitspunkten agieren können.

Mit der vorliegenden Erfindung wird ein Telekommunikationsnetz mit den Merkmalen des unabhängigen Anspruchs 1 bereitgestellt. Das Telekommunikationsnetz weist mehrere Netzabschnitte auf, die jeweils mindestens ein Netzelement aufweisen, wobei jeder Netzabschnitt ein Netzmanagementsystem zum Steuern des mindestens einen Netzelements aufweist. Die Netzmanagementsysteme werden über ein Datenkommunikationsnetz jeweils mit jedem einzelnen Netzelement des entsprechenden Netzabschnitts verbunden. Zumindest ein das Telekommunikationsnetz unterstützendes System ist zusammen mit den Netzelementen in mindestens einer Betriebsstelle angeordnet, wobei Netzelemente unterschiedlicher Netzabschnitte zusammen in einer der Betriebsstellen angeordnet sind. Das Telekommunikationsnetz weist ferner ein Betriebsstellenmanagementsystem auf, das lokal in einer der Betriebsstellen oder auch zentral angeordnet sein kann. Dieses Betriebsstellenmanagementsystem ist mit jedem der Netzmanagementsysteme verbunden und eingerichtet, um Daten der Netzabschnitte zu sammeln, die es ermöglichen, aus den Daten Informationen bezüglich des momentanen und/oder zukünftig zu erwartenden Kapazitätsbedarfs der Netzabschnitte zu ermitteln und auf der Basis des ermittelten Kapazitätsbedarfs eine lastadaptive Steuerung des unterstützenden Systems in jeder Betriebsstelle durchzuführen. Gemäß einer Ausführungsform der Erfindung ist das Betriebsstellenmanagementsystem über das Datenkommunikationsnetz mit den Netzmanagementsystemen der jeweiligen Netzabschnitte verbunden.

Das unterstützende System kann eine Einrichtung zur Strom- bzw. Leistungsversorgung, insbesondere eine Einrichtung zur unterbrechungsfreien Stromversorgung aufweisen. Ferner kann das unterstützende System eine Einrichtung zur Raumklimatisierung in der mindestens einen Betriebsstelle, insbesondere zur Steuerung der Temperatur und/oder Feuchtigkeit der Raumluft aufweisen.

Die gesammelten Daten können Daten über den Verkehrs- und/oder Leistungsbedarf der Netzelemente aufweisen. Vorzugsweise sind die Netzelemente eingerichtet, um die Daten zu speichern und diese dem jeweiligen Netzmanagementsystem oder dem Betriebsstellenmanagementsystem auf Anforderung zu übermitteln. Weiterhin zeichnet das Betriebsstellenmanagementsystem gemäß einer Ausführungsform den zeitlichen Verlauf des Verkehrs- und/oder Leistungsbedarf auf, um aus dem aufgezeichneten zeitlichen Verlauf insbesondere den zukünftig zu erwartenden Energiebedarf des Telekommunikationsnetzes abschätzen zu können.

Mit der Erfindung wird weiterhin ein Verfahren gemäß Anspruch 12 und ein Betriebsstellenmanagementsystem gemäß Anspruch 13 zur lastadaptiven Steuerung mindestens eines unterstützenden Systems in einem Telekommunikationsnetz bereitgestellt.

Über die Anbindung an das jeweilige Netzmanagementsystem in dem erfindungsgemäßen Telekommunikationsnetz können also alle Netzelemente des Wirknetzes erreicht werden. Es können Statusinformationen der einzelnen Netzelemente abgefragt werden und Steuerbefehle gesendet werden. Im Gegensatz zu bekannten Systemen können Informationen aus den NMS unterschiedlicher Netzabschnitte bzw. -plattformen so verknüpft werden, dass Informationen über Verkehrs- und Leistungsbedarfe daraus je Betriebsstelle aggregiert gewonnen werden können.

Die Erfindung stellt also eine Möglichkeit bereit, Informationen aus den Netzmanagementsystemen der verschiedenen Plattformen zu erfassen und so zu verknüpfen, um darauf basierend den Energiebedarf in Betriebsstellen von Telekommunikationsnetzbetreibern gegenüber dem gegenwärtigen Stand der Technik signifikant zu senken, insbesondere dadurch, dass der Betrieb gegenüber dem Stand der Technik lastadaptiver bezüglich der tatsächlich zu transportierenden und zu verarbeitenden Verkehrslast gestaltet werden kann. Die Erfindung kann damit einen Beitrag zu einer ökologischeren Struktur von IKT-Netzen leisten, die insgesamt zu einer verbesserten CO₂-Bilanz von Telekommunikationsnetzen führt.

Im Folgenden werden Ausführungsformen der Erfindung unter Bezugnahme auf die angehängten Figuren näher erläutert, wobei
Fig. 1 das Prinzip der Bestückung von Betriebsstellen mit Netzelementen (NE) und der Netzmanagementsysteme von Telekommunikationsnetzelementen je Netzplattform entsprechend dem Stand der Technik darstellt,
Fig. 2 den Aufbau eines Telekommunikationsnetzes mit Netzmanagementsystemen und verwalteten Netzelementen sowie das Prinzip einer NMS-übergreifenden Steuerung mittels einer zentralen NMS-Auswerte- und Steuereinheit gemäß einer Ausführungsform der vorliegenden Erfindung zeigt,
Fig. 3 eine Ausführungsform der Erfindung mit einem zentralen Betriebsstellenmanagementsystem und
Fig. 4 eine Ausführungsform der Erfindung mit Netzmanagementsystemen und verwalteten Netzelementen einer Betriebsstelle mit einem lokalen Betriebsstellenmanagementsystem zeigt.

Das Telekommunikationsnetz und das Verfahren entsprechend der vorliegenden Erfindung gestatten es, die Informationen aus verschiedenen Netzmanagementsystemen jedes Netzabschnittes bzw. jeder Netzplattform so miteinander zu verknüpfen, dass sie bezüglich der Ebene der Betriebsstellen aggregiert, ausgewertet und verwendet werden können, um Steuerinformationen für die Optimierung der Energieeffizienz einer Betriebsstelle zu erhalten.

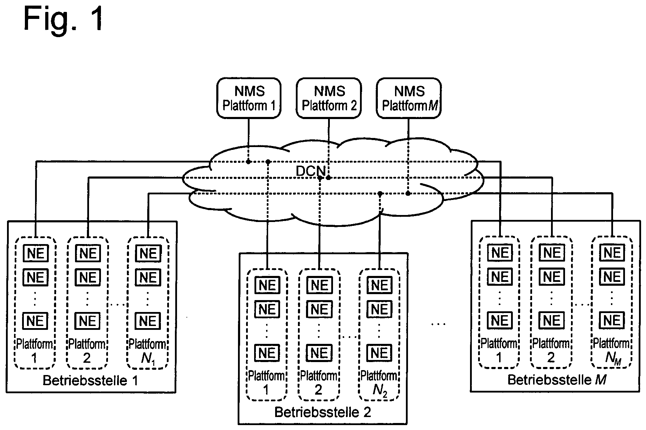

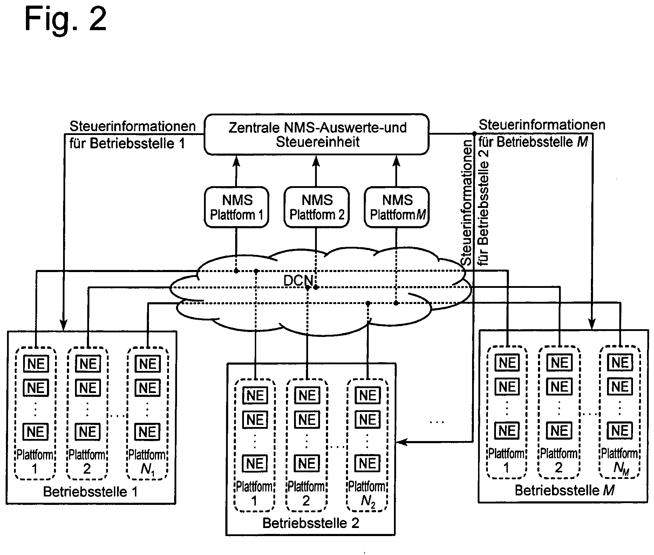

Fig. 2 illustriert das zu Grunde liegende Prinzip: Die Anordnung nach dem Stand der Technik entsprechend Fig. 1 wird um ein Betriebsstellenmanagementsystem bzw. eine NMS-Auswerte- und Steuereinheit ergänzt, die die relevanten Informationen für eine lastadaptive Steuerung von den NMS der einzelnen Wirknetzplattformen bekommt. Diese NMS-Auswerte- und Steuereinheit aggregiert die Daten aus den NMS der unterschiedlichen Netzabschnitte und -plattformen und extrahiert Informationen bezüglich des (erwarteten) Kapazitätsbedarfs der einzelnen Plattformen und ermittelt daraus über die in einer Betriebsstelle vorhandenen Netzelemente hinweg den Gesamtleistungsbedarf: Diese Information kann dann für eine lastadaptive Steuerung der unterstützenden Systeme wie z. B. Raumlufttechnik und unterbrechungsfreie Stromversorgung genutzt werden. Da mit Hilfe einer Prognose so auch eine zeitliche Kurve des Leistungsbedarfes an einem Standort erstellt werden kann, könnte diese Information auch für eine Optimierung des Energieeinkaufs - standortaufgelöst und als Funktion der Zeit - genutzt werden. Über eine spezielle Schnittstelle der Betriebsstelle wird von der NMS-Auswerte- und Steuereinheit diese Steuerinformation an die jeweilige Betriebsstelle übermittelt; diese Schnittstelle kann auch wieder - wie die NMS der einzelnen Plattformen - über das DCN angesprochen und geführt werden.

Zum Funktionieren des erfindungsgemäßen Konzepts ist es bevorzugt, dass die einzelnen Netzelemente des Wirknetzes die notwendigen Informationen erfassen (z. B. Bitratenanforderungen, aktivierte Kapazität, Leistungsbedarf) und über hinreichend lange Zeiträume speichern, so dass sie über das Netzmanagement der jeweiligen Plattform ausgelesen und von der zentralen NMS-Auswerte- und Steuereinheit für die Erstellung von Vorhersagen und die Extraktion der Steuerinformation für die jeweilige Betriebsstelle verwendet werden können. Diese Mechanismen und Protokollerweiterungen für die Speicherung der genannten Informationen in den Wirknetzelementen sind derzeit noch nicht vollständig in heutigen Netzelementen implementiert.

Im Detail muss dazu von jedem in Einsatz befindlichen Netzelement bzw. gleichartigen Netzelementen die aktuell aktivierte Kapazität und der damit korrelierte Leistungsbedarf des Netzelementes vorgehalten/gespeichert werden. Getriggert durch das korrespondierende Netzmanagementsystem werden die Speicher der zugehörigen Netzelemente zeitnah ausgelesen und an die zentrale NMS-Auswerte- und Steuereinheit übergeben. Die NMS-Auswerte- und Steuereinheit ist mit allen Netzmanagementsystemen verbunden und erhält die Datenpakete aller Netzelemente. Die Zeitintervalle zum Auslesen der Netzelemente können variabel festgelegt werden und richten sich nach der zu erwartenden Schwankungsbreite des Verkehrs im betrachteten Zeitintervall, der Zeit für das Aktivieren/Deaktivieren der benötigten Kapazität des Netzelementes (inklusive zu berücksichtigender Reservekapazitäten), der Granularität der zu schaltenden Kapazität, der entsprechenden Antwort-/Reaktionszeit des Netzelementes sowie möglicher Einschwingzeiten, wenn mehrere Netzelemente mit einander verbunden sind.

In der NMS-Auswerte- und Steuereinheit werden die ausgelesenen Daten analysiert und geeignet aufbereitet. Entscheidend ist es, die Daten aller Netzelemente einer Betriebsstelle zu aggregieren und für die Steuerung der unterstützenden Systeme in der Betriebsstelle zur Verfügung zu stellen. Hier können ggf. auch andere Bedarfsträger an den Steuerdaten partizipieren. Des Weiteren werden die Daten zu Prognose- und Statistikzwecken gespeichert. In der NMS-Auswerte- und Steuereinheit sollten daher alle Informationen hinterlegt sein, welche Netzelemente zu welcher Betriebsstelle gehören.

Das Wirkprinzip lässt sich anschaulich anhand eines einfachen Regelkreises beschreiben. Bei der Regelgröße kann es sich um verschiedene Parameter der in der Betriebsstelle vorhandenen unterstützenden Systeme handeln. Z.B. könnte die momentan benötigte Leistung der Gleichrichteranlage oder die aktuell benötigte Kälteleistung der Klimaanlagen dafür stehen. Die Führungsgröße lässt sich aus der dieser Erfindungsbeschreibung zugrundeliegenden NMS-Auswerte- und Steuerungseinheit gewinnen. Sie stellt hier die momentan benötigte Leistung aller Telekommunikationsnetzelemente in der Betriebsstelle dar. Aus der sich ergebenden Regelabweichung zwischen benötigter Leistung aller Netzelemente und verfügbarer Gleichrichterleistung wird eine Regelabweichung bestimmt und dem Regler zugeführt. Dieser stellt an den Gleichrichtern durch diskretes Zu- oder Abschalten von Gleichrichtereinheiten (z.B. entsprechend Verfahren nach der oben genannten deutschen Patentanmeldung Nr. 10 2012 102 607.6) die benötigte Leistung zur Verfügung. Die Stellgröße wäre in diesem Fall ein geeigneter Parameter zur Steuerung der einzelnen Gleichrichtermodule. Die Regelstrecke stellen die einzelnen parallel geschalteten Gleichrichtermodule dar. Als Störgröße könnte in diesem Beispiel die zusätzliche Information für die gezielte Ladung von an den Gleichrichtermodulen angeschalteten Akkumulatoren zur unterbrechungsfreien Stromversorgung bezeichnet werden. Dadurch muss die Regelstrecke mehr Leistung an den Gleichrichtern zur Verfügung stellen, als für die Netzelemente in der Betriebsstelle benötigt wird (hier, um zusätzlich die Akkumulatoren aufzuladen). Als Störgröße ist auch die Temperatur der Betriebsstelle zu sehen. Wenn die Regelstrecke z.B. die Klimaanlage darstellt, dann kann die Regelgröße "Kälteleistung" neben der Führungsgröße "benötigte Klimatisierung für aktuelle Leistung der Netzelemente" durch eine zusätzliche Erwärmung der Betriebsstelle durch erhöhte Außentemperaturen beeinflusst sein. Über die für einen Regelkreis typische Rückführung wird jederzeit die Regelgröße mit der Führungsgröße verglichen und wenn nötig gegengesteuert.

Außerdem können die durch das Monitoring der Leistungsbedarfe in einer Betriebsstelle gewonnenen Informationen kumuliert an weitere Bedarfsträger (z. B. Energieversorgungsunternehmen) übergeben werden, um die Versorgungskette weiter zu optimieren (z. B. zur Ausregelung von Netzschwankungen).

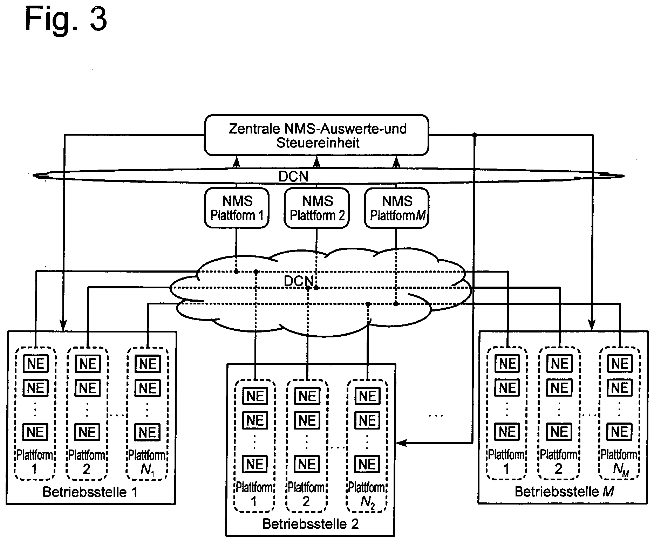

In Fig. 3 ist ein Ausführungsbeispiel entsprechend der vorliegenden Erfindung dargestellt, bei dem das Betriebsstellenmanagement zentralisiert erfolgt. Eine zentrale NMS-Auswerte- und Steuereinheit ist über das DCN mit allen relevanten NMS der einzelnen Plattformen verbunden und kann die entsprechenden dort abgelegten Mess- und ggf. Prognosewerte auslesen. Die zentrale NMS-Auswerte- und Steuereinheit verarbeitet diese Informationen zu Verkehrsbedarf und Leistungsbedarf auf der Ebene einer Betriebsstelle, errechnet entsprechende Prognosedaten und Steuerinformationen und steuert damit über eine dedizierte DCN-Anbindung die betreffende Betriebsstelle hinsichtlich Raumlufttechnik und Stromversorgungsanlagen auf der Grundlage der Verkehrslast und der daraus resultierenden Leistungsaufnahme über der Zeit (in der Darstellung bezeichnen die beiden Teile - "Wolken" - ein einziges DCN, das hier nur aus Gründen der Darstellung unterteilt wurde).

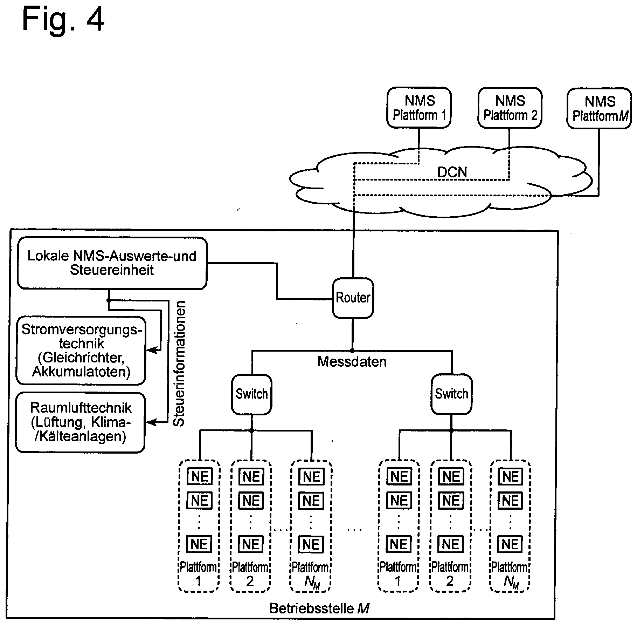

Fig. 4 zeigt ein weiteres Ausführungsbeispiel der vorliegenden Erfindung: Gemäß diese Ausführungsform ist eine lokale NMS-Auswerte- und Steuereinheit in der Betriebsstelle installiert. Sie erhält, wie in dem oben beschriebenen Ausführungsbeispiel, alle notwendigen Informationen zu Verkehrs- und Leistungsbedarf direkt aus den Netzelementen der Betriebsstelle über die Netzelemente des DCN (z. B. Switches und Router) in der jeweiligen Betriebsstelle und ist zusätzlich über das DCN an die Netzmanagementsysteme der jeweiligen, in der betreffenden Betriebsstelle vorhandenen, Netzplattformen angeschlossen. Auf diese Weise können die gleichen Daten erfasst, verarbeitet und zur Steuerung der Raumlufttechnik sowie der Stromversorgungsanlagen benutzt werden, wie bereits in dem Ausführungsbeispiel gemäß Fig. 3 beschrieben.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentliche", "etwa, "ungefähr" und dergleichen in Verbindung mit einer Eigenschaft beziehungsweise einem Wert definieren insbesondere auch genau die Eigenschaft beziehungsweise genau den Wert.

## Patentansprüche

1. Telekommunikationsnetz, das aufweist:
mehrere Netzabschnitte, die jeweils mindestens ein Netzelement aufweisen, wobei jeder Netzabschnitt ein Netzmanagementsystem zum Steuern des mindestens einen Netzelements aufweist;
ein Datenkommunikationsnetz zum Verbinden der Netzmanagementsysteme jeweils mit jedem einzelnen Netzelement des entsprechenden Netzabschnitts;
ein das Telekommunikationsnetz unterstützendes System, wobei die Netzelemente zusammen mit dem unterstützenden System in mindestens einer Betriebsstelle angeordnet sind, wobei Netzelemente unterschiedlicher Netzabschnitte zusammen in einer der Betriebsstellen angeordnet sind; und
ein Betriebsstellenmanagementsystem, das mit jedem der Netzmanagementsysteme verbunden ist und eingerichtet ist, um Daten der Netzabschnitte zu sammeln, aus den Daten Informationen bezüglich des momentanen und/oder zukünftig zu erwartenden Kapazitätsbedarfs der Netzabschnitte zu ermitteln, und auf der Basis des ermittelten Kapazitätsbedarfs eine lastadaptive Steuerung des unterstützenden Systems in jeder Betriebsstelle durchzuführen.

2. Telekommunikationsnetz nach Anspruch 1, wobei das unterstützende System eine Einrichtung zur Strom- bzw. Leistungsversorgung, insbesondere eine Einrichtung zur unterbrechungsfreien Stromversorgung aufweist.

3. Telekommunikationsnetz nach Anspruch 1 oder 2, wobei das unterstützende System eine Einrichtung zur Raumklimatisierung in der mindestens einen Betriebsstelle, insbesondere zur Steuerung der Temperatur und/oder Feuchtigkeit der Raumluft aufweist.

4. Telekommunikationsnetz nach Anspruch 1, 2 oder 3, wobei die gesammelten Daten Daten über den Verkehrs- und/oder Leistungsbedarf der Netzelemente aufweisen.

5. Telekommunikationsnetz nach einem der vorhergehenden Ansprüche, wobei die Netzelemente eingerichtet sind, die Daten zu speichern und dem jeweiligen Netzmanagementsystem oder dem Betriebsstellenmanagementsystem auf Anforderung zu übermitteln.

6. Telekommunikationsnetz nach einem der vorhergehenden Ansprüche, wobei die lastadaptive Steuerung des unterstützenden Systems mit Hilfe eines Regelkreises erfolgt.

7. Telekommunikationsnetz nach einem der vorhergehenden Ansprüche, wobei das Betriebsstellenmanagementsystem über das Datenkommunikationsnetz mit den Netzmanagementsystemen der jeweiligen Netzabschnitte verbunden ist.

8. Telekommunikationsnetz nach einem der vorhergehenden Ansprüche, wobei das Betriebsstellenmanagementsystem zentral angeordnet ist.

9. Telekommunikationsnetz nach einem der Ansprüche 2 bis 8, wobei das Betriebsstellenmanagementsystem lokal in einer der Betriebsstellen angeordnet ist.

10. Telekommunikationsnetz nach einem der vorhergehenden Ansprüche, wobei das Betriebsstellenmanagementsystem den zeitlichen Verlauf des Verkehrs- und/oder Leistungsbedarf aufzeichnet.

11. Telekommunikationsnetz nach Anspruch 10, wobei aus dem aufgezeichneten zeitlichen Verlauf der zukünftig zu erwartende Energiebedarf des Telekommunikationsnetzes abgeschätzt werden kann.

12. Verfahren zur lastadaptiven Steuerung mindestens eines unterstützenden Systems in einem Telekommunikationsnetz mit mehreren Netzabschnitten, die jeweils mindestens ein Netzelement aufweisen, wobei jeder Netzabschnitt ein Netzmanagementsystem zum Steuern des mindestens einen Netzelements aufweist, insbesondere ein Telekommunikationsnetz nach einem der vorstehenden Ansprüche, mit den Schritten:
Sammeln von Daten über den Betrieb der in den mehreren Netzabschnitten angeordneten Netzelemente in einem Betriebsstellenmanagementsystem, die mit jedem der Netzmanagementsysteme verbunden sind;
Ermitteln des momentanen und/oder zukünftig zu erwartenden Kapazitätsbedarfs der Netzabschnitte aus den gesammelten Daten;
Durchführen einer lastadaptiven Steuerung von das Telekommunikationsnetz unterstützenden Systemen auf der Basis des ermittelten Kapazitätsbedarfs und des sich daraus ergebenden Leistungsbedarfs.

13. Betriebsstellenmanagementsystem zur lastadaptiven Steuerung mindestens eines unterstützenden Systems in einem Telekommunikationsnetz mit mehreren Netzabschnitten, die jeweils mindestens ein Netzelement aufweisen, wobei jeder Netzabschnitt ein Netzmanagementsystem zum Steuern des mindestens einen Netzelements aufweist, insbesondere ein Telekommunikationsnetz nach einem der Ansprüche 1 bis 11, wobei das Betriebsstellenmanagementsystem zur Durchführung des Verfahrens nach Anspruch 12 geeignet ist.

## Claims

1. A telecommunications network comprising:
a plurality of network sections, each comprising at least one network element, wherein each network section comprises a network management system for controlling the at least one network element;
a data communications network for respectively connecting the network management systems to each individual network element of the corresponding network section;
a system supporting the telecommunications network, wherein the network elements are arranged together with the supportive system in at least one operating site, wherein network elements of different network sections are arranged together in one of the operating sites; and
an operating site management system connected to each of the network management systems and adapted to collect data of the network sections, to determine information relating to the current capacity requirements and/or the capacity requirements to be expected in the future based on the data, and to carry out a load adaptive control of the supportive system in each operating site based on the determined capacity requirements.

2. The telecommunications network according to claim 1, wherein the supportive system comprises a means for current or power supply, in particular a means for an interruption-free current supply.

3. The telecommunications network according to claim 1 or 2, wherein the supportive system comprises a means for the room climate control of the at least one operating site, in particular for controlling the temperature and/or humidity of the room air.

4. The telecommunications network according to claim 1, 2 or 3, wherein the collected data comprise data about the traffic and/or power requirements of the network elements.

5. The telecommunications network according to any of the preceding claims, wherein the network elements are adapted to store data and transmit them to the respective network management system or the operating site management system upon request.

6. The telecommunications network according to any of the preceding claims, wherein the load adaptive control of the supportive system is realized by means of a control circuit.

7. The telecommunications network according to any of the preceding claims, wherein the operating site management system is connected to the network management systems of the respective network sections by means of the data communications network.

8. The telecommunications network according to any of the preceding claims, wherein the operating site management system is arranged centrally.

9. The telecommunications network according to any of claims 2 to 8, wherein the operating site management system is arranged locally in one of the operating sites.

10. The telecommunications network according to any of the preceding claims, wherein the operating site management system records the temporal course of the traffic and/or power requirements.

11. The telecommunications network according to claim 10, wherein the energy requirements of the telecommunications network to be expected in the future can be estimated on the basis of the recorded temporal course.

12. A method for the load adaptive control of at least one supportive system in a telecommunications network comprising a plurality of network sections, each comprising at least one network element, wherein each network section comprises a network management system for controlling the at least one network element, in particular a telecommunications network according to any of the preceding claims, comprising the steps of:
collecting, in an operating site management system, data about the operation of the network elements which are arranged in the plurality of network sections and which are connected to each of the network management systems;
determining the current capacity requirements of the network sections and/or the capacity requirements of the network sections to be expected in the future based on the collected data;
carrying out a load adaptive control of systems supporting the telecommunications network based on the determined capacity requirements and the resulting power requirements.

13. An operating site management system for the load adaptive control of at least one supportive system in a telecommunications network comprising a plurality of network sections, each comprising at least one network element, wherein each network section comprises a network management system for controlling the at least one network element, in particular a telecommunications network according to any of claims 1 to 11, wherein the operating site management system is suitable for carrying out the method according to claim 12.

## Revendications

1. Réseau de télécommunications, qui comprend :
plusieurs portions de réseau, qui comprennent chacune au moins un élément de réseau, dans lesquelles chaque portion de réseau comprend un système de gestion de réseau pour commander ledit au moins un élément de réseau ;
un réseau de communication de données pour relier les systèmes de gestion de réseau respectivement à chaque élément de réseau individuel de la portion de réseau correspondante ;
un système qui soutient le réseau de télécommunications, de sorte que les éléments de réseau sont agencés, conjointement avec le système de soutien, dans au moins un poste de service, et des éléments de réseau de différentes portions de réseau sont agencés conjointement dans l'un des postes de service ; et
un système de gestion de postes le service, qui est relié à chacun des systèmes de gestion de réseau afin de collecter des données des portions de réseau, de déterminer à partir des données des informations se rapportant aux besoins de capacité momentanés et/ou à attendre dans le futur, des portions de réseau, et d'exécuter, en se basant sur le besoin de capacité déterminé, une commande adaptative vis-à-vis de la charge du système à soutenir dans chaque poste de service.

2. Réseau de télécommunications selon la revendication 1, dans lequel le système à soutenir comprend un système pour l'alimentation en courant ou l'alimentation en puissance, en particulier un système pour l'alimentation électrique sans coupure.

3. Système de télécommunications selon la revendication 1 ou 2, dans lequel le système à soutenir comprend un système pour la climatisation ambiante dans ledit au moins un poste de service, en particulier pour commander la température et/ou l'humidité de l'air ambiant.

4. Réseau de télécommunications selon la revendication 1, 2 ou 3, dans lequel les données collectées comprennent des données concernant le besoin en débit et/ou le besoin en puissance des éléments de réseau.

5. Réseau de télécommunications selon l'une des revendications précédentes, dans lequel les éléments de réseau sont conçus pour mémoriser les données et pour les transmettre sur requête au système de gestion de réseau respectif ou au système de gestion de poste de service respectif.

6. Réseau de télécommunications selon l'une des revendications précédentes, dans lequel la commande adaptative vis-à-vis de la charge du système à soutenir a lieu avec l'aide d'un circuit de régulation.

7. Réseau de télécommunications selon l'une des revendications précédentes, dans lequel le système de gestion de poste de service et relié, via le réseau de communication de données, aux systèmes de gestion de réseau des portions de réseau respectives.

8. Réseau de télécommunications selon l'une des revendications précédentes, dans lequel le système de gestion de poste de service est agencé de façon centrale.

9. Réseau de télécommunications selon l'une des revendications 2 à 8, dans lequel le système de gestion de poste de service est agencé localement dans l'un des postes de service.

10. Réseau de télécommunications selon l'une des revendications précédentes, dans lequel le système de gestion de poste de service enregistre le déroulement temporel du besoin en débit et/ou du besoin en puissance.

11. Réseau de télécommunications selon la revendication 10, dans lequel, à partir du déroulement temporel enregistré, le besoin en énergie à attendre dans le futur du réseau de télécommunications peut être estimé.

12. Procédé pour la commande adaptative vis-à-vis de la charge d'au moins un système à soutenir dans un réseau de télécommunication comprenant plusieurs portions de réseau, qui comprennent chacune au moins un élément de réseau, dans lequel chaque portion de réseau comprend un système de gestion de réseau pour commander ledit au moins un élément de réseau, en particulier un réseau de télécommunications selon l'une des revendications précédentes, comprenant les étapes consistant à :
collecter des données concernant le fonctionnement des éléments de réseau agencés dans plusieurs portions de réseau, dans un système de gestion de poste de service, qui est relié à chacun des systèmes de gestion de réseau ;
déterminer le besoin de capacité momentanée et/ou à attendre dans le futur, des portions de réseau à partir des données collectées ;
exécuter une commande adaptative vis-à-vis de la charge de systèmes qui soutiennent le réseau de télécommunications en se basant sur le besoin en capacité déterminé et sur le besoin en puissance qui en résulte.

13. Système de gestion de poste de service pour la commande adaptative vis-à-vis de la charge d'au moins un système à soutenir dans un réseau de télécommunication comprenant plusieurs portions de réseau, qui est comprennent chacune au moins un élément de réseau, dans lequel chaque portion de réseau comprend un système de gestion de réseau pour commander ledit au moins un élément de réseau, en particulier un réseau de télécommunications selon l'une des revendications 1 à 11, dans lequel le système de gestion de poste de service et approprié pour la mise en oeuvre du procédé selon la revendication 12.
